# EUROPEAN PATENT SPECIFICATION

(11) **EP 1 204 553 B1**
(45) Date of publication and mention of the grant of the patent: **20.10.2004**
(21) Application number: 00957293.4
(22) Date of filing: 03.08.2000
(51) Int. Cl.: B65B 21/06

(54) **DEVICE FOR METERING A GROUP OF ARTICLES**
VORRICHTUNG ZUM FORMEN EINER ABGEZÄHLTEN GRUPPE VON GEGENSTÄNDEN
DISPOSITIF DE COMPTAGE D'UN GROUPE D'ARTICLES

(30) Priority: 03.08.1999 GB 9918205
(43) Date of publication of application: 15.05.2002
(73) Proprietor: MeadWestvaco Packaging Systems LLC, Stamford, Connecticut 06905 (US)
(72) Inventor: BONNAIN, Jean-Christophe, F-36000 Chateauroux (FR); DUPERRAY, Philippe, F-36000 Chateauroux (FR); MARTINI, Pascal, F-36000 Chateauroux (FR)
(74) Representative: Hepworth, John Malcolm
(86) International application number: PCT/US2000/021277
(87) International publication number: WO 2001/008978

(56) References cited:
- WO-A-96/30263
- DE-A- 4 207 725
- GB-A- 2 090 804

## Description

The present invention relates to a device for metering articles in a packaging machine. More particularly, the present invention relates to a device for grouping a predetermined number of articles and feeding the grouping downstream at a predetermined pitch. The invention also relates to a method of metering articles.

Known metering devices generally comprise opposed reciprocating clamping devices which engage the sides of a predetermined number of articles and accelerate the articles to separate them away from an in-feed stream thereof. An example of such a device is disclosed by European Patent Application 0708028 to the Riverwood International Corporation.

DE 4207727 discloses an apparatus comprising a metering device, and a device for supporting an array of articles conveying means including a plurality of lugs mounted on an endless track and cam means.

Some known devices are generally limited to the metering of a single article type, grouping and pitch, or alternatively require a significant amount of machine downtime to change these variables. Furthermore, the throughput of such devices is intrinsically limited by their design.

The present invention seeks to overcome or at least mitigate the problems of the prior art.

One aspect of the present invention provides a metering device comprising an article conveying means including a plurality of lugs mounted on an endless track and cam means. The metering device is adapted selectively to separate a group of articles from an infeed stream of such articles wherein the cam means causes the lugs to move from a retracted position to a deployed position interposed between the article groups at a desired location at an infeed end of the device. Successively deployed lugs are caused to form an article group containing a predetermined number of articles with a predetermined spacing between adjacent groupings and the lugs are accelerated by drive means to form each article group to achieve the desired spacing between adjacent groupings.
According to an optional feature of this aspect of the invention, the lug may comprise an elongate member which is slidably mounted on a slide member and releasably secured to a mounting member slidably mounted on the slide member. Preferably, the cam means comprises a cam follower provided on the mounting member, arranged to follow a fixed cam profile within said endless track. Preferably, each elongate member is detachably connected to be removed from their respective mounting members and secured to alternative mounting members, thereby to adjust the spacing and/or size of articles contained in the grouping.

Preferably, the device further comprises control means to control the speed of the or each lug thereby to control the number of articles in each grouping and/or the spacing between adjacent groupings and comprises means for receiving information regarding the speed of articles at the infeed end of the article conveying means.

The control means may comprise a manual input means. Optionally, the control means comprises a sensor arranged to measure the speed of articles at the infeed end of the article conveying means. There may further comprise a sensor arranged to measure the speed of the lug or lugs. The control means may vary the speed of the lug or lugs to lie within the range plus or minus 1-30% of the speed of the articles at the infeed end of the article conveying means.

In one class of embodiments, the control means comprises a central processor, a manual input means, and separate means controlled by the central processor for individually positioning and/or relocating the or each lug and the endless track.

The device may be used in a packaging machine having an article feed means in the form of a star wheel, the control means controlling the speed of rotation of the star wheel. The control means may control a motor which rotates the star wheel. Furthermore the speed of supply of articles may be altered by the control means as required depending on the size or type of cartons at the infeed end. The relative positions and state of motion of each of the moveable components may be sensed using individual sensors and transmitted to the control means.
Another aspect of the present invention provides a method of metering articles into groupings having a predetermined pitch comprising the steps of: continuously feeding articles into the infeed end of an article conveying means at a known rate;
synchronising movement of elongate members with that of the articles such that successively deployed elongate members are interposed between the articles so as to form article groups; accelerating the elongate members and article groups such that a predetermined pitch between adjacent groupings is achieved wherein once the required article groups and pitches have been formed, causing said deployed elongate members to be detracted to a stowed position.

Preferably, the speed of the articles at the infeed end of the article conveying means is received by control means which controls the speed of the elongate members. More preferably the speed of said articles is entered manually or, as the case may be, automatically.

Exemplary embodiments of the present invention are now described, by way of example only, with reference to the drawings in which:
FIGURE 1 is a perspective view of a lug assembly according to an embodiment of the invention;
FIGURE 2 is a perspective view of an alternative lug assembly according to a second embodiment of the invention;
FIGURE 3 is a perspective view of a mounting assembly on which the lug assemblies of Figure 1 or Figure 2 may fit;
FIGURE 4 is a bottom view of a cam and follower arrangement according to a first embodiment of the invention;
FIGURES 5A and 5B are perspective and plan views respectively of one configuration of the device according to an embodiment of the invention;
FIGURE 6 is a flow diagram of a controller suitable for operating a device in accordance with the present invention;
FIGURES 7A and 7B are further perspective and plan views respectively of another configuration for use with a different grouping; and
FIGURES 8A and 8B are perspective and plan views respectively of a further configuration of the device for a different article grouping.

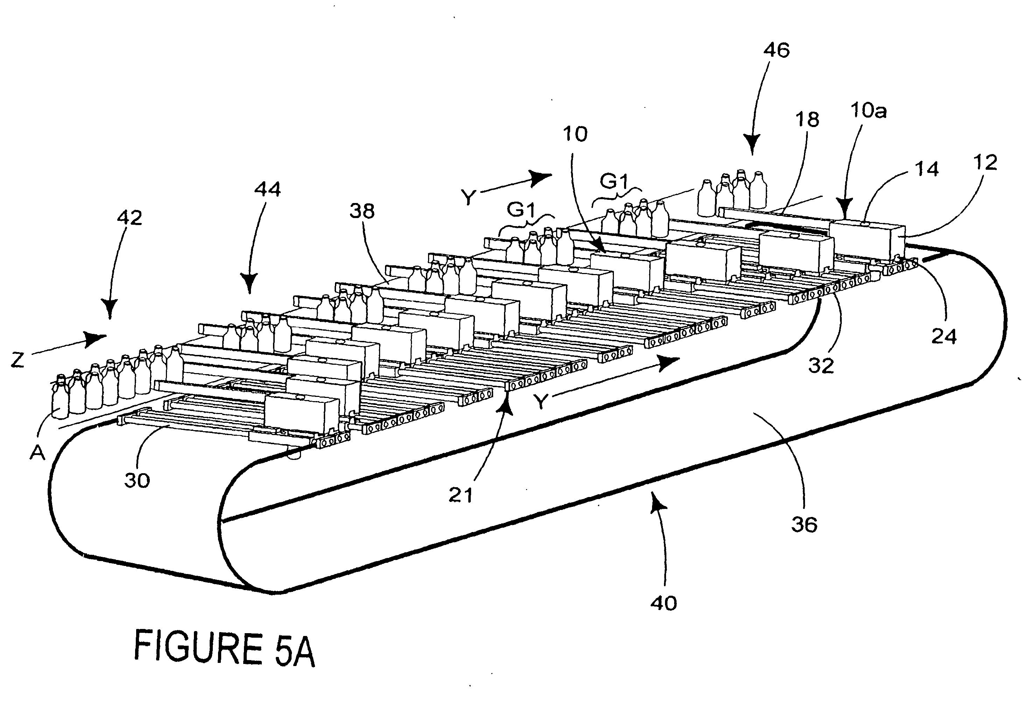

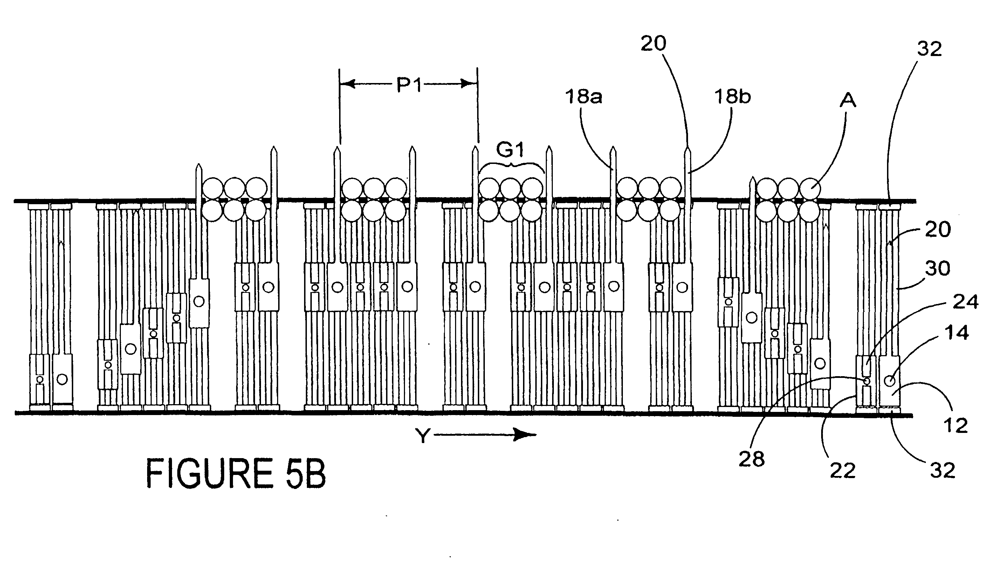

Referring to the drawings there is shown in Figures 5A and 5B a metering device for selectively separating at least one article "A" from an infeed stream of such articles comprising an article conveying means 38 including one or more lugs mounted on an endless track 36, wherein cam means 26, 34 causes the or each lug to move from a retracted position to a deployed position interposed between the articles at a desired location at an infeed end of the device and the or each lug is caused to form a grouping containing a predetermined number of articles with a predetermined spacing between adjacent groupings.

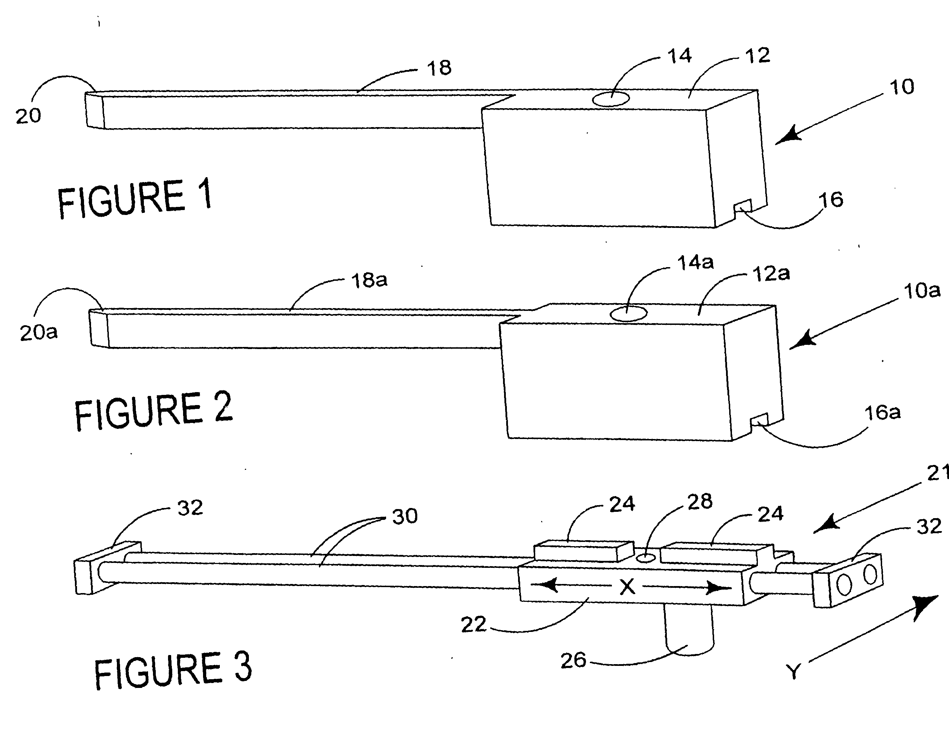

Referring now to Figure 1, there is shown a lug assembly 10 for use with the device of the present invention, preferably comprising a body portion 12 having an elongate member 18 projecting therefrom. The body portion preferably includes mounting means which, in this embodiment, comprises a recess 16 and a bore 14 extending from top to bottom through the body portion 10 in which some form of bolt or quick release fastener (not shown) may fit. The free end of the member 18 preferably terminates at a point 20. in this embodiment, one side face of the member 18 is co-extensive with a side face of the body 12.

In other embodiments, the elongate member may be positioned to be co-extensive with the opposing side face of the body 12.

Referring now to Figure 2, there is shown a variant of the lug assembly 10a which again comprises a body portion 12a having mounting means 14a and 16a provided thereon.
In this variant of the assembly 10a however, the member 18a is mounted substantially centrally on the body portion 12a. The different positions of the elongate member with respect to the body portion provides accurate positioning of the elongate members for different article groupings.

Turning now to Figure 3, there is shown a device for moving the lug assembly between retracted (or stowed) position and an operative position. In this embodiment there comprises a slide assembly 21, including a mounting member 22 and a pair of slide rods 30 secured at their ends to connectors 32. The connectors 32 are connected to an endless track described below. In this embodiment, the mounting member 22 is journalled onto the slide rods 30 to permit slidable movement in the directions indicated by the arrows X.

The mounting member 22 further preferably comprises co-operating mounting means to secure lug assembly 10 thereto. In this embodiment, the mounting means is provided by raised portions 24 which cooperate with recess 16 on the lug assembly, and an aperture 28 in which a bolt or some form of quick release fastener may be releasably secured in co-operation with aperture 14 of the lug assembly 10, to prevent relative movement therebetween. In alternative classes of embodiment, other known mounting means such as a suitable clip may be used.

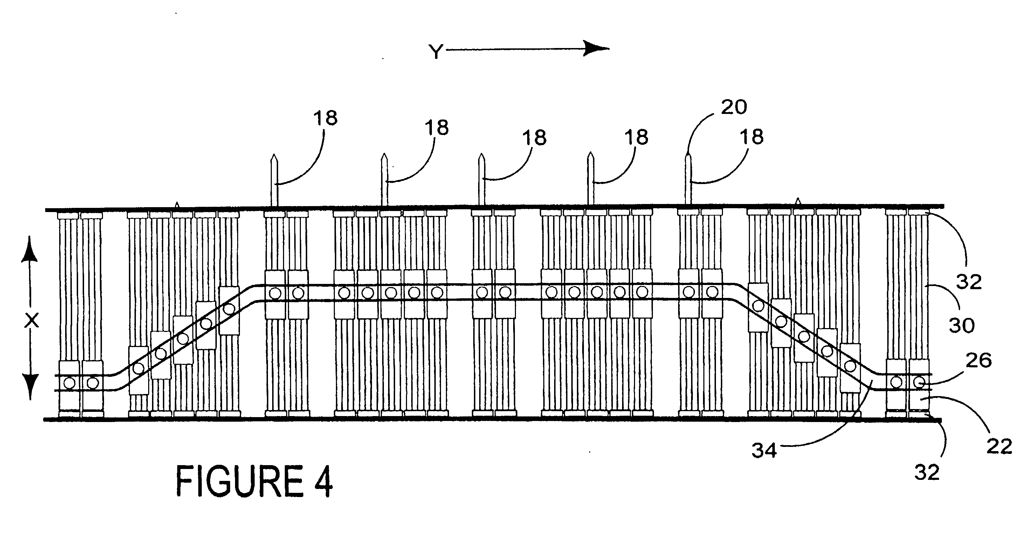

A cam arrangement is provided in this embodiment for guiding the mounting means 22 through the working reach. The cam arrangement is provided with a cam follower 26 projecting from the underside of the mounting member 22, and co-operating with a cam profile 34 (Figure 4). In Figure 4 there is shown a bottom view of a plurality of slide assemblies 21 hingedly connected one to the next as part of an endless track 36 with, in some cases, lug assemblies 10, 10a mounted thereon. A fixed cam profile 34 is provided under the slide assemblies. In this embodiment cam followers 26 fit into the cam profile, and as the endless track 36 advances in a direction Y, the cam track 34 causes the slide members 22 hence the lug assemblies 10, 10a to move in a direction X such that the elongate members 18 are moved from a retracted position substantially overlying the endless track 36 to a deployed position in which the elongate members 18 project over the article conveying means 38.

Referring now to Figures 5A and 5B, the device 40 including lug assemblies 10, 10a and slide members 21 is shown in operation. It can be seen that, for the purposes of clarity, Figure 5A, does not show the slide assemblies 21 along the entire extent of the endless track 36. The endless track is driven by suitable drive means (not shown) such as a servo motor.

In one class of embodiments, the slide assemblies 22 are grouped so that there comprises pairs of slide assemblies 22, separated by groups of four slide assemblies 22. This allows different pitches to be used, for the various group sizes.

A continuous stream of articles "A" progresses downstream from an infeed end 42 of article conveying means 38 at a velocity Z. In this embodiment, the articles are bottles, however in alternative embodiments, the articles may be cans or paperboard "bricks", for example. The flow of articles is preferably controlled by a star wheel assembly (not shown) which feeds the articles at a known rate, although in alternative classes of embodiment, other suitable known flow controller may be used.

The article conveyor is a variable speed conveyor controlled by the controller. Therefore, to increase the flow rate, for example for a larger group of articles, the control means causes the star wheel and article conveyor to speed up.

As the articles "A" progress downstream one of the plurality of elongate members 18 will become interposed between the pairs of adjacent articles "A" under the influence of the cam assembly. Advantageously for each grouping G1, a leading elongate member 18b is also introduced downstream of the grouping, prior to the interposition of a trailing elongate member 18a, thereby ensuring that the articles "A" remain tightly packed within the grouping G1.

The downstream velocity Y of the elongate members 10, 10a is generally greater than the downstream velocity 2 of the articles "A". Therefore, when elongate member 18a becomes interposed, the articles "A" downstream of the interposition point are accelerated, such that the pitch P1 between adjacent groupings G1 is achieved. In this embodiment, each grouping G1 comprises six articles in a 3 x 2 configuration. At position 44, the article conveyor means 38 preferably therefore permits the article groupings G1 to be accelerated in a substantially unhindered manner which is controlled by the controller. To achieve this, the article conveyor means 38, may at this point, consist of freely rotating rollers, or similar suitable means known in the art.

To maintain tight grouping in a transverse direction, adjustable guides (not shown) arranged either side of the articles, parallel to the downstream direction, may be used. Once the desired pitch has been achieved, the groupings G1 may be transferred to an endless conveyor, for example, travelling at substantially the same velocity Y as the endless track 36. The cam profile is then preferably arranged to cause the elongate members 18 to retract, thus allowing the article groupings G1 at position 46 to progress downstream to the next process, e.g. an article loading station (not shown).

It is naturally of great importance that each elongate member 18 is interposed between the articles "A" at the correct position such that the interposition point coincides substantially with the intersection point between adjacent articles "A". Furthermore, the article infeed, and the elongate member 18 must be synchronised such that the correct number of articles "A" are downstream of the point of interposition, for there to be the correct number of articles "A" in each grouping G1.

To this end, it is envisaged that the device may be controlled by a suitable controller. The controller may be a dedicated processor or may be control means for a packaging machine with which the apparatus of the invention is used. Alternatively, the controller may preferably be a known programmable servo control system.

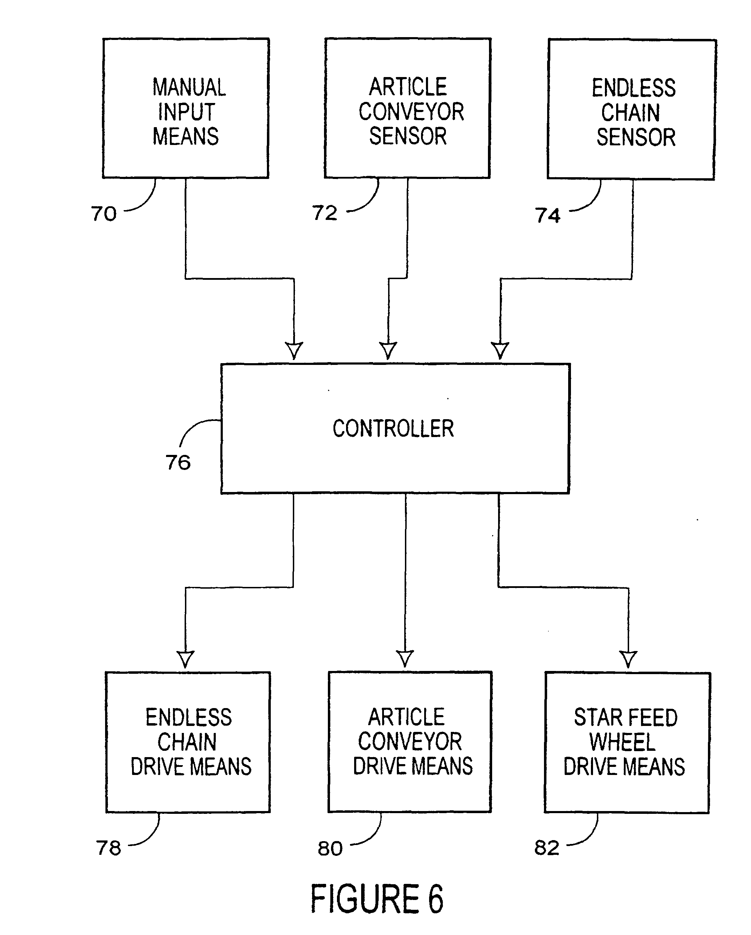

Reference is now made to Figure 6, which illustrates the flow diagram of a suitable controller. The controller has a central processor, a manual input means through which specific instructions can be programmed, and optionally, a display which indicates useful information to the machine operator. The central processor and the display can display operational information such as the speed of operation of the machine and its compliance with particular safety requirements, in the normal manner.

The controller controls the positions of the moveable components as well as the speed of movement of variable speed components. For example, the central processor controls the motors 140 which power the feed means (drive belt, star wheel and device) which move articles to be packed into (the infeed end of) the machine.

Data regarding the infeed rate of articles "A", the dimensions of the articles, the required number of articles "A" in each grouping G1 and the spacing of the elongate members 18 is input into the controller. The data may be input manually 70 or may be supplied by one or more sensors (not shown) provided on the infeed stream of the articles 72 and the endless chain 74. Taking this data, the controller 76 computes the relative positions of the articles at the infeed end 42 of the article conveyor means 38, and the elongate members 18. The controller then signals the drive means 78 driving the device to increase or decrease the downstream velocity of lug assemblies 10, 10a in order that the correct point of interposition can be achieved. The control means is preferably capable of varying the speed of the elongate members 18 in the range plus or minus 1-30% of the speed of the articles "A" at the infeed end of the article conveying means 38.

If the device is switched regularly between a number of standard groupings and pitches, information regarding the dimensions of articles "A", and the spacing of the elongate members 18 preferably stored in memory associated with the controller to speed changeover between different configurations.

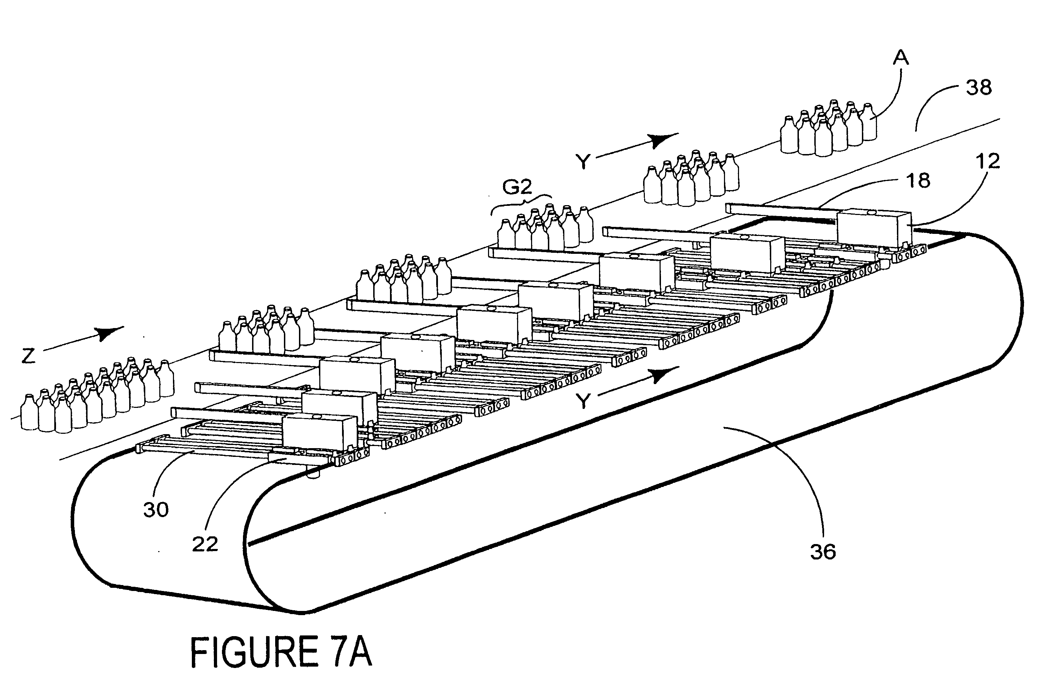

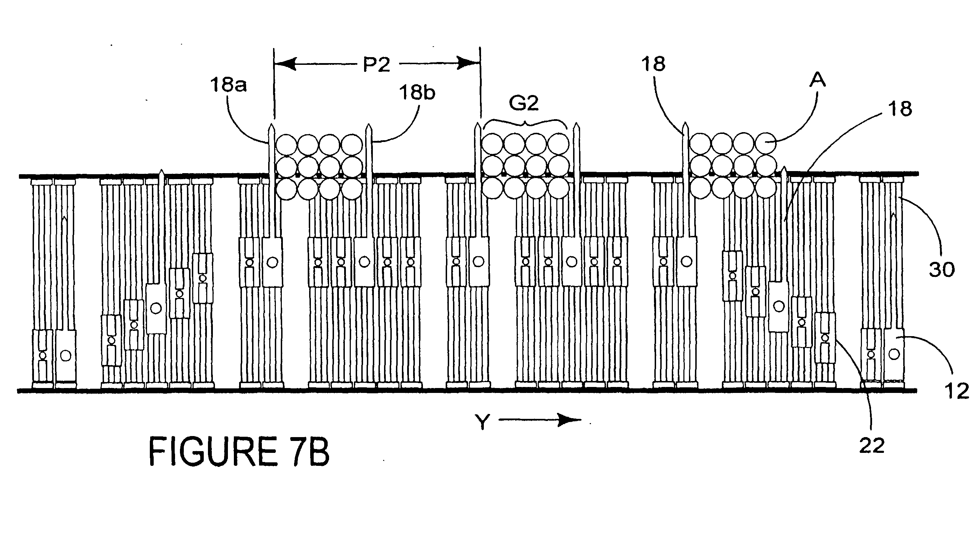

A different pitch and grouping set up can be seen in Figures 7A and 7B, namely a grouping G2 having a 4 x 3 article configuration with an increased pitch P2 between adjacent article groupings. For this to be achieved, the spacing between the trailing elongate member 18a and a leading elongate member 18b is increased, and the spacing between corresponding leading and trailing elongate members for adjacent groupings G2 is also increased. This is achieved by removing a number of lug assemblies 10, 10a and replacing them on alternative mounting members 22. If star wheels are being used to meter the article infeed, these would also need to be adjusted to accommodate the extra row of articles, and the controller reprogrammed to take into account the changes to the drive means 80, 82 for the article conveyor and star wheel.

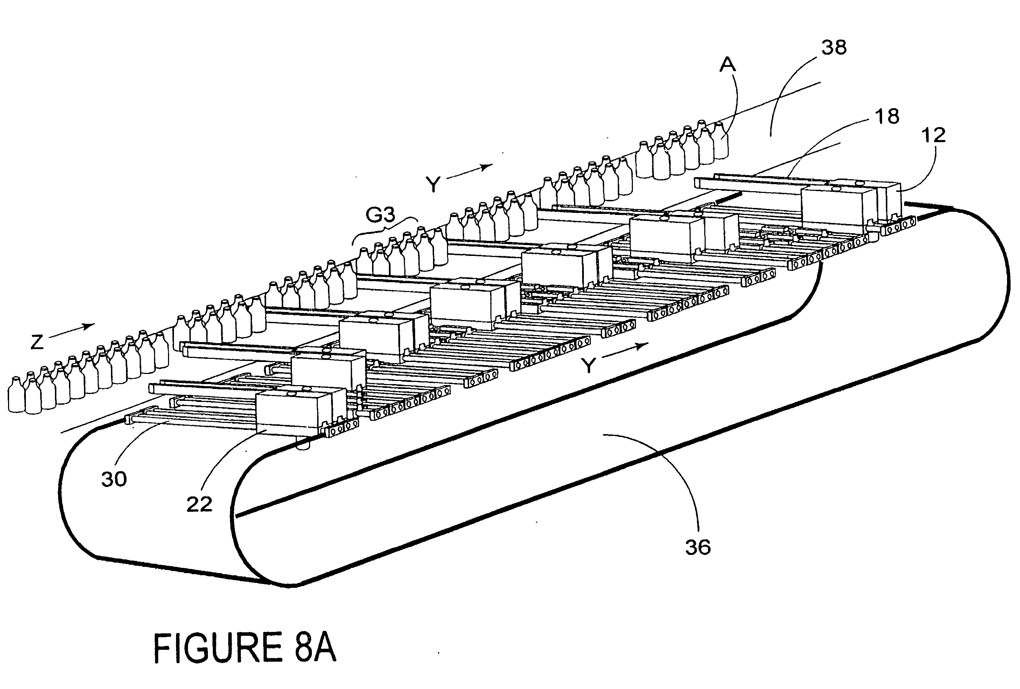

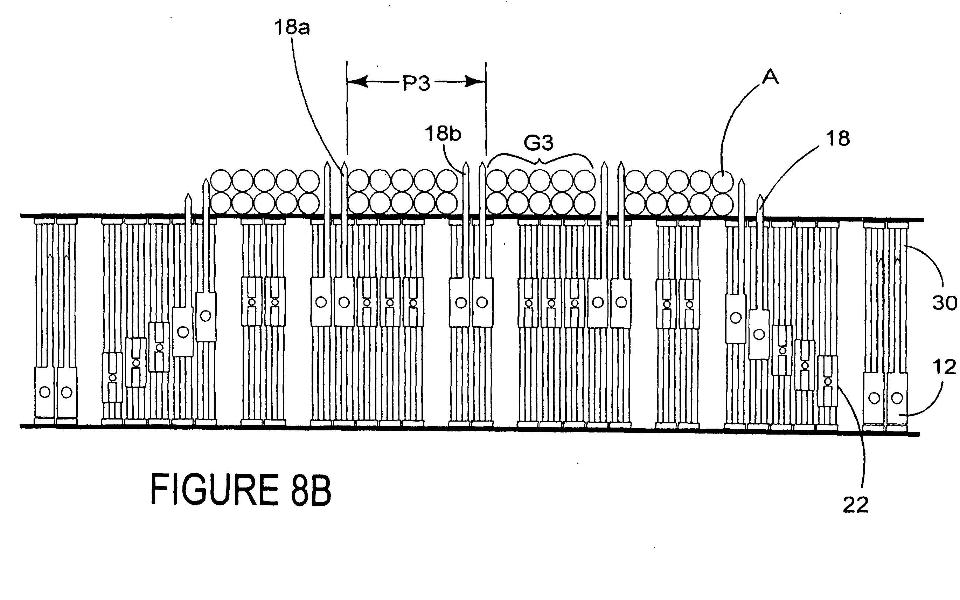

Figures 8A and 8B illustrate a further configuration of elongate members for a 5 x 2 grouping of articles G3 with a pitch P3 therebetween. It can be seen that pitch P3 is substantially identical to pitch P 1 of Figures 5a and 5b, however the leading elongate member 18b has been moved to accommodate the greater number of articles in the grouping.

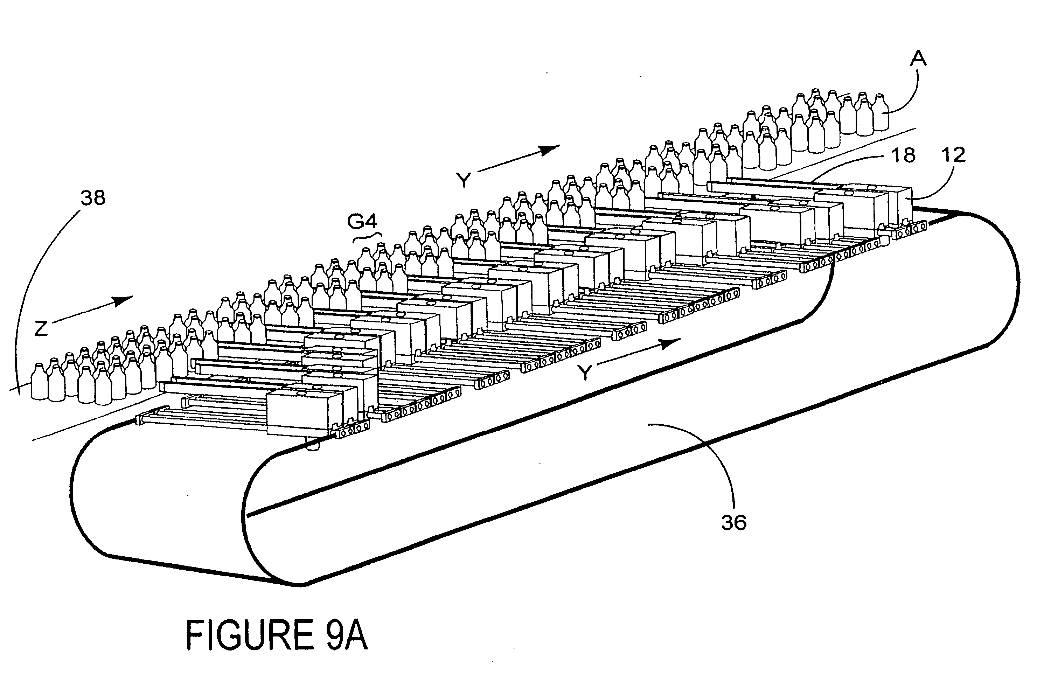

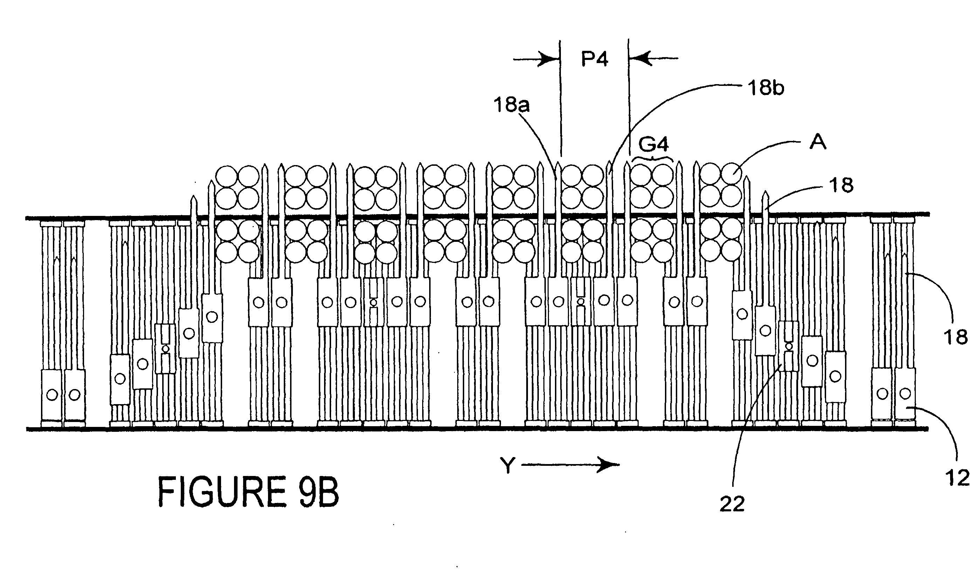

Figures 9A and 9B illustrate a further configuration of elongate members for forming a grouping G4 comprising two sets of articles in a 2 x 2 configuration with a space therebetween. The pitch between adjacent groupings P4 is smaller than the pitch of the other configurations. In this embodiment, the differential between the velocity Y of the elongate members, and the velocity Z of the infeed end of the article conveyor means 38 will therefore necessarily be lower than for the other configurations.

It is apparent that, because of the straightforward means for attaching the lug assemblies 10, 10a to the mounting members 22, changing the grouping and pitches can be achieved easily and relatively rapidly. To make small adjustments in the elongate member spacings, a combination of lug assemblies 10 and 10a may be used due to the differing relative positions of the elongate member 18 to the body portion 12.

It will be recognised that as used herein the terms "top", "bottom" and "side" with respect to the device are relative terms, and that the device may be re-orientated as necessary or as desired.

The metering device of the present invention may be sold as an integral part of a packaging machine. Alternatively, the device may be sold as an individual module to be fitted to new equipment or existing equipment on a retrofit basis.

Numerous changes may be made within the scope of the present invention, for example for mechanism for deploying the elongate members may be substituted for some form of hydraulic or pneumatic actuators, the design of the lug assemblies may be adjusted for different article types, the securing means for securing the elongate members on the mounting members may be changed as necessary, and a different slide assembly configuration may be used.

## Claims

1. A metering device (40) comprising an article conveying means (38) including a plurality of lugs (10, 10a) mounted on an endless track (36) and cam means (26, 34) **characterised in that** the metering device is adapted selectively to separate a group of articles from an infeed stream of such articles (A) wherein said cam means (26, 34) causes said lugs (10, 10a) to move from a retracted position to a deployed position interposed between the article groups at a desired location at an infeed end (42) of the device (40) and wherein successively deployed lugs (10,10a) are caused to form an article group (G1-G4) containing a predetermined number of articles (A) with a predetermined spacing between adjacent groupings and wherein the lugs (10, 10a) are accelerated by drive means to form each article group to achieve the desired spacing between adjacent groupings.

2. The device according to claim 1 wherein the lug (10, 10a) comprises an elongate member (18) which is slidably mounted on a slide member (21) and releasably secured to a mounting member (22) slidably mounted on the slide member (21).

3. The device according to claim 1 or claim 2 wherein the cam means (26,34) comprises a cam follower (26) provided on the mounting member (22), arranged to follow a fixed cam profile (34) within said endless track (36).

4. The device according to claim 2 or claim 3 wherein each elongate member (18) is detachably connected to be removed from their respective mounting members (22) and secured to alternative mounting members, thereby to adjust the spacing and/or size of articles (A) contained in the grouping (G1-G4).

5. The device according to any preceding claim wherein the device further comprises control means (76) to control the speed of the or each lug (10, 10a) thereby to control the number of articles (A) in each grouping (G1-G4), and/or the spacing between adjacent groupings and comprises means for receiving information regarding the speed of articles at the infeed end of the article conveying means (38).

6. The device as claimed in claim 5, wherein said control means comprises a manual input means.

7. The device as claimed in claim 5 or 6, wherein said control means comprises a sensor arranged to measure the speed of articles at the infeed end of the article conveying means.

8. The device as claimed in any one of claims 5 to 7 having a sensor arranged to measure the speed of said lug or lugs.

9. The device as claimed in any of claims 5 to 8 wherein said control means varies the speed of the lug or lugs to lie within the range plus or minus 1-30% of the speed of the articles at the infeed end of the article conveying means.

10. The device as claimed in any one of claims 5 to 9 wherein the control means comprises a central processor, a manual input means, and separate means controlled by said central processor for individually positioning and/or relocating the or each lug and the endless track.

11. The device as claimed in claim 10 in combination with a packaging machine having an article feed means in the form of a star wheel, the control means controlling the speed of rotation of the star wheel.

12. The device as claimed in claim 11, wherein the control means controls a motor which rotates the star wheel.

13. The device as claimed in any one of claims 10 to 12 wherein the speed of supply of articles is alterable by the control means as required depending on the size or type of cartons at the infeed end.

14. A device as claimed in any one of claims 10 to 13 wherein the relative positions and state of motion of each of the moveable components is sensed using individual sensors and transmitted to the control means.

15. A method of metering articles (A) involving continuously feeding articles (A) to article conveying means, **characterised in that** the method comprises metering articles into groupings (G1-G4) having a predetermined pitch (P1-P4) by the steps of: continuously feeding articles (A) into the infeed end (42) of an article conveying means (38) at a known rate; synchronising movement of elongate members (18) with that of the articles such that successively deployed elongate members (18) are interposed between the articles so as to form article groups (G1-G4); accelerating the elongate members (18) and article groups (G1-G4) such that a predetermined pitch (P1-P4)between adjacent groupings is achieved wherein once the required article groups and pitches have been formed, causing said deployed elongate members (18) to be detracted to a stowed position.

16. A method as claimed in claim 15, wherein the speed of the articles at the infeed end of the article conveying means is received by control means which controls the speed of the elongate members.

17. A method as claimed in claim 15 or 16, wherein the speed of said articles is entered manually.

18. A method as claimed in claim 15 or 16, wherein the speed of said articles is sensed automatically.

19. A packaging machine incorporating a metering device (40) as claimed in any of claims 1 to 14 or a method of metering articles (A) as claimed in any one of claims 15 to 18.

## Patentansprüche

1. Bemessungsvorrichtung (40), die Gegenstandsbeförderungsmittel (38) umfasst, die eine Vielzahl von Zapfen (10, 10a) einschließen, die auf einer Endlosspur (36) angebracht sind, sowie Nockenmittel (26, 34), **dadurch gekennzeichnet, dass** die Bemessungsvorrichtung angepasst ist, selektiv eine Gruppe von Gegenständen von einem Einlassstrom von derartigen Gegenständen (A) zu trennen, wobei die Nockenmittel (26, 34) bewirken, dass die Zapfen (10, 10a) sich von einer eingezogenen Position zu einer ausgefahrenen Position bewegen, die zwischen den Gegenstandsgruppen an einer gewünschten Stelle an einem Einlassende (42) der Vorrichtung (40) angeordnet sind, und wobei bewirkt wird, dass nach einander ausgefahrene Zapfen (10, 10a) eine Gegenstandsgruppe (G1-G4) ausbilden, die eine vorbestimmte Anzahl von Gegenständen (A) mit einem vorbestimmten Abstand zwischen benachbarten Gruppierungen enthält, und wobei die Zapfen (10, 10a) durch Antriebsmittel beschleunigt werden, um jede Gegenstandsgruppe auszubilden, um den gewünschten Abstand zwischen benachbarten Gruppierungen zu erreichen.

2. Vorrichtung nach Anspruch 1, wobei die Zapfen (10, 10a) ein längliches Element (18) umfassen, das gleitfähig auf einem Gleitelement (21) angebracht ist und freigebbar an ein Befestigungselement (22) befestigt ist, das gleitfähig auf dem Gleitelement (21) befestigt ist.

3. Vorrichtung nach Anspruch 1 oder 2, wobei die Nockenmittel (26, 34) einen Nockenstößel (26) umfassen, der auf dem Befestigungselement (22) bereitgestellt ist, der angeordnet ist, einem feststehenden Nockenprofil (34) innerhalb der Endlosspur (36) zu folgen.

4. Vorrichtung nach Anspruch 2 oder 3, wobei jedes längliche Element (18) entfernbar verbunden ist, um von deren jeweiligen Befestigungselementen (22) entfernt zu werden und an alternative Befestigungselemente befestigt zu werden, um dadurch den Abstand und/oder die Größe der Gegenstände (A) anzupassen, die in der Gruppierung (G1-G4) enthalten sind.

5. Vorrichtung nach einem der vorstehenden Ansprüche, wobei die Vorrichtung ferner Steuermittel (76) umfasst, um die Geschwindigkeit des oder jeden Zapfens (10, 10a) zu steuern, um somit die Anzahl der Gegenstände (A) in jeder Gruppierung (G1-G4) und/oder den Abstand zwischen benachbarten Gruppierungen zu steuern, sowie Mittel umfasst, um Information bezüglich der Geschwindigkeit der Gegenstände am Einlassende der Gegenstandsbeförderungsmittel (38) zu erhalten.

6. Vorrichtung nach Anspruch 5, wobei die Steuermittel manuelle Eingabemittel umfassen.

7. Vorrichtung nach Anspruch 5 oder 6, wobei die Steuermittel einen Sensor umfassen, der angeordnet ist, um die Geschwindigkeit der Gegenstände am Einlassende der Gegenstandsbeförderungsmittel zu messen.

8. Vorrichtung nach einem der Ansprüche 5 bis 7, wobei die Vorrichtung einen Sensor aufweist, der angeordnet ist, um die Geschwindigkeit des Zapfens oder der Zapfen zu.messen.

9. Vorrichtung nach einem der Ansprüche 5 bis 8, wobei die Steuermittel die Geschwindigkeit des Zapfens oder der Zapfen variiert, um innerhalb des Bereichs von plus oder minus 1-30% der Geschwindigkeit der Gegenstände am Einlassende der Gegenstandsbeförderungsmittel zu liegen.

10. Vorrichtung nach einem der Ansprüche 5 bis 9, wobei die Steuermittel einen Zentralprozessor, manuelle Eingabemittel und separate Mittel umfassen, die mittels des Zentralprozessors gesteuert werden, um individuell den oder jeden Zapfen und die Endlosspur zu positionieren und/oder zurück zu setzen.

11. Vorrichtung nach Anspruch 10 in Kombination mit einer Verpackungsmaschine mit einer Gegenstandszuführeinrichtung in Form eines Steuerrads, wobei die Steuermittel die Rotationsgeschwindigkeit des Steuerrads steuern.

12. Vorrichtung nach Anspruch 11, wobei die Steuermittel einen Motor steuern, der das Steuerrad rotiert.

13. Vorrichtung nach einem der Ansprüche 10 bis 12, wobei die Zuführgeschwindigkeit der Gegenstände durch die Steuermittel, wie es erforderlich ist, je nach der Größe oder des Typs der Schachteln am Einlassende geändert werden kann.

14. Vorrichtung nach einem der Ansprüche 10 bis 13, wobei die relativen Positionen und der Bewegungszustand jeder der beweglichen Komponenten unter Verwendung individueller Sensoren erfasst werden und zu den Steuermitteln übertragen werden.

15. Verfahren zum Bemessen von Gegenständen (A) beinhaltend das kontinuierliche Zuführen von Gegenständen (A) zu Gegenstandsbeförderungsmitteln, **dadurch gekennzeichnet, dass** das Verfahren das Bemessen von Gegenständen in Gruppierungen (G1-G4) mit einem vorbestimmten Abstand (P1-P4) mittels der folgenden Schritte umfasst: das kontinuierliche Zuführen von Gegenständen (A) in das Einlassende (42) von Gegenstandsbeförderungsmitteln (34) mit einer bekannten Rate; das Abstimmen der Bewegung der länglichen Elemente (18) mit der Bewegung der Gegenstände, so dass nach einander ausgefahrene längliche Elemente (18) zwischen den Gegenständen derart angeordnet sind, um Gegenstandsgruppen (G1-G4) auszubilden; das Beschleunigen der länglichen Elemente (18) und der Gegenstandsgruppen (G1-G4), so dass ein vorbestimmter Abstand (P1-P4) zwischen angrenzenden Gruppierungen errecht wird, wobei, sobald die erforderlichen Gegenstandsgruppen und Abstände ausgebildet worden sind, bewirkt wird, dass die ausgefahrenen länglichen Elemente (18) in eine zurückgezogene Position zurückgezogen werden.

16. Verfahren nach Anspruch 15, wobei die Geschwindigkeit der Gegenstände am Einlassende der Gegenstandsbeförderungsmittel von Steuermitteln empfangen wird, die die Geschwindigkeit der länglichen Elemente steuern.

17. Verfahren nach Anspruch 15 oder 16, wobei die Geschwindigkeit der Gegenstände manuell eingegeben wird.

18. Verfahren nach Anspruch 15 oder 16, wobei die Geschwindigkeit der Gegenstände automatisch erfasst wird.

19. Verpackungsmaschine, die eine Bemessungsvorrichtung (40) gemäß einem der Ansprüche 1 bis 14 oder ein Verfahren zum Bemessen von Gegenständen (A) nach einem der Ansprüche 15 bis 18 enthält.

## Revendications

1. Dispositif de comptage (40) comprenant un moyen de transport (38) d'articles comportant une pluralité d'oreilles (10, 10a) montées sur une piste sans fin (36) et un moyen formant came (26, 34), **caractérisé en ce que** le dispositif de comptage est adapté sélectivement pour séparer un groupe d'articles depuis un flux entrant de ces articles (A), où ledit moyen formant came (26, 34) fait se déplacer lesdites oreilles (10, 10a) d'une position rétractée à une position déployée intercalée entre les groupes d'articles en un endroit voulu en une extrémité d'entrée (42) du dispositif (40) et où l'on forme au moyen d'oreilles successivement déployées (10, 10a) un groupe d'articles (G1-G4) contenant un nombre prédéterminé d'articles (A) avec un espace prédéterminé entre les groupements adjacents et dans lequel les oreilles (10, 10a) sont accélérées par un moyen d'entraînement pour former chaque groupe d'articles pour obtenir l'espace voulu entre les groupements adjacents.

2. Dispositif selon la revendication 1, dans lequel l'oreille (10, 10a) comprend un élément de forme allongée (18) qui est monté à coulissement sur un élément coulissant (21) et est fixé de manière détachable sur un élément de support (22) monté à coulissement sur l'élément coulissant (21).

3. Dispositif selon la revendication 1 ou 2, dans lequel le moyen formant came (26, 34) comprend un galet de came (26) placé sur l'élément de support (22), adapté pour suivre un profil de came fixe (34) dans ladite piste sans fin (36).

4. Dispositif selon la revendication 2 ou 3, dans lequel chaque élément allongé (18) est connecté de manière détachable pour être retiré de son élément de support (22) respectif et fixé à d'autres éléments de support, afin de régler l'espacement et/ou la taille des articles (A) contenus dans le groupement (G1-G4).

5. Dispositif selon l'une quelconque des revendications précédentes, dans lequel le dispositif comprend en outre un moyen de commande (76) pour réguler la vitesse de l'oreille ou de chaque oreille (10, 10a) afin de réguler le nombre d'articles (A) dans chaque groupement (G1-G4), et/ou l'espace entre groupements adjacents et comprend un moyen servant à recevoir des informations concernant la vitesse des articles à l'extrémité d'entrée du moyen de transport (38) d'articles.

6. Dispositif selon la revendication 5, dans lequel ledit moyen de commande comprend un moyen d'entrée manuelle.

7. Dispositif selon la revendication 5 ou 6, dans lequel ledit moyen de commande comprend un capteur adapté pour mesurer la vitesse des articles à l'extrémité d'entrée du moyen de transport d'articles.

8. Dispositif selon l'une quelconque des revendications 5 à 7, comportant un capteur adapté pour mesurer la vitesse de ladite ou desdites oreille(s).

9. Dispositif selon l'une quelconque des revendications 5 à 8, dans lequel ledit moyen de commande fait varier la vitesse de l'oreille ou des oreilles dans la plage de plus ou moins 1 à 30 % de la vitesse des articles à l'extrémité d'entrée du moyen de transport d'articles.

10. Dispositif selon l'une quelconque des revendications 5 à 9, dans lequel le moyen de commande comprend un processeur central, un moyen d'entrée manuelle et un moyen séparé commandé par ledit processeur central pour positionner individuellement et/ou repositionner l'oreille ou chaque oreille et la piste sans fin.

11. Dispositif selon la revendication 10 en association avec une machine d'emballage ayant un moyen d'alimentation en articles sous la forme d'une roue en étoile, le moyen de commande régulant la vitesse de rotation de la roue en étoile.

12. Dispositif selon la revendication 11, dans lequel le moyen de commande commande un moteur qui fait tourner la roue en étoile.

13. Dispositif selon l'une quelconque des revendications 10 à 12, dans lequel la vitesse d'alimentation des articles est modifiable par le moyen de commande comme nécessaire en fonction de la taille ou du type de cartons arrivant à l'extrémité d'entrée.

14. Dispositif selon l'une quelconque des revendications 10 à 13, dans lequel les positions relative et l'état de déplacement de chacun des composants mobiles sont mesurés en utilisant des capteurs individuels puis transmis au moyen de commande.

15. Procédé de comptage d'articles (A) impliquant le fait de fournir en continu des articles (A) à un moyen de transport d'articles, **caractérisé en ce que** le procédé comprend le fait de compter les articles en groupements (G1-G4) ayant un pas prédéterminé (P1-P4) par les étapes consistant à : fournir en continu des articles (A) à l'extrémité d'entrée (42) d'un moyen de transport (38) d'articles avec un débit connu, synchroniser le mouvement d'éléments allongés (18) avec celui des articles de telle manière que des éléments allongés (18) successivement déployés sont intercalés entre les articles afin de former des groupes d'articles (G1-G4), faire accélérer les éléments allongés (18) et les groupes d'articles (G1-G4) de manière telle qu'un pas prédéterminé (P1-P4) entre groupements adjacents est obtenu où une fois que les groupes d'articles et les pas voulus ont été formés, on fait se rétracter les éléments allongés déployés (18) dans une position repliée.

16. Procédé selon la revendication 15, dans lequel la vitesse des articles à l'extrémité d'entrée du moyen de transport d'articles est reçue par le moyen de commande qui commande la vitesse des éléments allongés.

17. Procédé selon la revendication 15 ou 16, dans lequel la vitesse desdits articles est entrée manuellement.

18. Procédé selon la revendication 15 ou 16, dans lequel la vitesse desdits articles est mesurée automatiquement.

19. Machine d'emballage comportant un dispositif de comptage (40) conforme à l'une quelconque des revendications 1 à 14 ou mettant en oeuvre un procédé de comptage d'articles (A) conforme à l'une quelconque des revendications 15 à 18.
